(19) Europäisches Patentamt
European Patent Office
Office européen des brevets

(11) **EP 3 309 712 A1**

(12) **DEMANDE DE BREVET EUROPEEN**

(43) Date de publication:
**18.04.2018 Bulletin 2018/16**

(51) Int Cl.:
***G06K 9/00*** *(2006.01)* ***G06K 9/50*** *(2006.01)*

(21) Numéro de dépôt: **17196405.9**

(22) Date de dépôt: **13.10.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **13.10.2016 FR 1659912**

(71) Demandeur: **Parrot Drones**
**75010 Paris (FR)**

(72) Inventeur: **FOURNIER, Louis-Joseph**
**78220 VIROFLAY (FR)**

(74) Mandataire: **Lavoix**
**2, place d'Estienne d'Orves**
**75441 Paris Cedex 09 (FR)**

(54) **PROCÉDÉ ET SYSTÈME ÉLECTRONIQUE DE DÉTECTION D'UNE CIBLE, PROGRAMME D'ORDINATEUR ASSOCIÉ**

(57) Ce procédé de détection d'une cible (12), à l'aide d'un système électronique de détection, comprend :
- l'acquisition d'une image d'une scène comportant la cible (12), l'image acquise comportant une représentation de la cible (12),
- la détermination d'au moins un segment relatif à la cible (12) à partir d'au moins un segment de référence (21R) relatif à une représentation de référence de la cible (12), et
- l'estimation, à partir du ou des segments déterminés, d'une zone entourant la représentation de la cible (12) dans l'image acquise,
au moins un segment déterminé est distinct d'un contour de la représentation de la cible (12) et comporte au moins un point inclus à l'intérieur de ladite représentation.

FIG.5

EP 3 309 712 A1

**Description**

La présente invention concerne un procédé de détection d'une cible, mis en oeuvre par un système électronique de détection. Le procédé comprend l'acquisition d'au moins une image d'une scène comportant la cible, chaque image acquise comportant une représentation de la cible ; et l'estimation d'une zone entourant la représentation de la cible dans l'image acquise.

L'invention concerne également un programme d'ordinateur comportant des instructions logicielles qui, lorsqu'elles sont exécutées par un ordinateur, mettent en oeuvre un tel procédé de détection.

L'invention concerne également un système électronique associé de détection d'une cible.

L'invention offre de nombreuses applications, en particulier pour le suivi de cibles mobiles.

L'invention concerne notamment le domaine des appareils motorisés volants pilotés à distance, également appelés drones. L'invention s'applique tout particulièrement aux drones à voilure tournante, tels que les quadricoptères, tout en s'appliquant également à d'autres types de drones, par exemple les drones à voilure fixe. L'invention est alors particulièrement utile lorsque le drone est dans un mode de poursuite pour suivre une cible donnée, telle que le pilote du drone pratiquant une activité sportive.

L'article intitulé « Edge Boxes : Locating Object Proposals from Edges » de Zitnick et al décrit l'estimation, dans une image acquise, de zones rectangulaires entourant chacune un objet d'intérêt, et la détection de ces objets d'intérêt est basée sur une recherche des contours de ces objets. Un indicateur de pertinence est alors calculé en fonction de la différence du nombre de contours inclus dans une zone donnée et du nombre de contours chevauchant la frontière de cette zone donnée.

Toutefois, un tel procédé de détection n'est pas assez efficace pour effectuer le suivi d'une cible mobile.

Le but de l'invention est alors de proposer un système et un procédé de détection, qui soit plus efficace pour le suivi d'une cible mobile.

A cet effet, l'invention a pour objet un procédé de détection d'une cible, le procédé étant mis en oeuvre par un système électronique de détection et comprenant :

- l'acquisition d'une image d'une scène comportant la cible, l'image acquise comportant une représentation de la cible,
- la détermination d'au moins un segment relatif à la cible à partir d'au moins un segment de référence relatif à une représentation de référence de la cible, et
- l'estimation, à partir du ou des segments déterminés, d'une zone entourant la représentation de la cible dans l'image acquise,

au moins un segment déterminé est distinct d'un contour de la représentation de la cible et comporte au moins un point inclus à l'intérieur de ladite représentation,
au moins un segment déterminé étant de préférence rectiligne.

Le procédé de détection selon l'invention permet alors de retrouver la représentation de la cible dans une nouvelle image acquise en faisant une correspondance entre des segments de référence, de préférence rectilignes, relatifs à une représentation de référence de la cible dans une image précédente et les nouveaux segments déterminés, de préférence rectilignes, pour la représentation de la cible dans la nouvelle image acquise. Le procédé permet alors de faciliter la recherche de la représentation de la cible dans la nouvelle image acquise, et permet également, à titre complémentaire, de calculer un indice de similarité entre la représentation de référence de la cible dans l'image précédente et la représentation de la cible dans la nouvelle image acquise.

Le procédé de détection selon l'invention permet en outre de recaler la position et l'échelle de la représentation de la cible dans l'image acquise, et est destiné à être utilisé en complément d'un ou plusieurs autres algorithmes de suivi de la cible dans des images acquises successivement.

Autrement dit, le procédé de détection selon l'invention permet de recadrer l'échelle de la représentation de la cible suivie d'une image à l'autre, par exemple lors de la réalisation d'une vidéo à l'aide du capteur d'image, voire de confirmer une nouvelle détection de la cible après que celle-ci ait été perdue.

A titre complémentaire, le procédé de détection selon l'invention permet également en outre de fournir un indice de confiance de la détection effectuée.

Suivant d'autres aspects avantageux de l'invention, le procédé de détection comprend une ou plusieurs des caractéristiques suivantes, prises isolément ou suivant toutes les combinaisons techniquement possibles :

- la détermination d'au moins un segment relatif à la cible comporte, pour au moins un segment de référence :

    + la présélection de plusieurs segments distincts d'un contour de la représentation de la cible et comportant chacun au moins un point inclus à l'intérieur de ladite représentation,
    + le calcul, pour chaque segment présélectionné, d'un écart entre le segment présélectionné et le segment de référence,

le segment déterminé étant alors le segment parmi les segments présélectionnés pour lequel l'écart calculé a la plus faible valeur ;

- chaque segment comporte des coordonnées de deux points dans l'image et une ou plusieurs valeurs d'intensité, les valeurs d'intensité étant de préférence exprimées en niveaux de gris ;
- l'écart calculé est fonction de valeurs d'intensité du segment présélectionné et du segment de référence ;
- l'écart calculé est fonction de longueurs du segment présélectionné et du segment de référence ;
- l'écart calculé est fonction de positions du segment présélectionné et du segment de référence ;
- chaque segment comporte plusieurs tronçons successifs entre ses deux extrémités, avec une valeur respective d'intensité associée à chaque tronçon, et lors du calcul de l'écart, un écart unitaire est calculé entre chaque tronçon du segment présélectionné et chaque tronçon correspondant du segment de référence, l'écart calculé étant alors fonction des écarts unitaires calculés ;
- le procédé comprend en outre :

  + le calcul d'un repère normalisé à partir de segments déterminés, le repère normalisé ayant pour centre le barycentre des segments déterminés pondérés par leur longueur, et la longueur moyenne des segments déterminés étant fixée égale à l'unité dans le repère normalisé, et
  + la mise à jour dans le repère normalisé des écarts calculés pour chacun des segments déterminés.

L'invention a également pour objet un programme d'ordinateur comportant des instructions logicielles qui, lorsqu'elles sont exécutées par un ordinateur, mettent en oeuvre un procédé tel que défini ci-dessus.

L'invention a également pour objet un système électronique de détection d'une cible, comprenant :

- un module d'acquisition configuré pour acquérir une image d'une scène comportant la cible, l'image acquise comportant une représentation de la cible,
- un module de détermination configuré pour déterminer au moins un segment relatif à la cible à partir d'au moins un segment de référence relatif à une représentation de référence de la cible, et
- un module d'estimation configuré pour estimer, à partir du ou des segments déterminés, une zone entourant la représentation de la cible dans l'image acquise,

au moins un segment déterminé étant distinct d'un contour de la représentation de la cible et comporte au moins un point inclus à l'intérieur de ladite représentation,
au moins un segment déterminé étant de préférence rectiligne.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un système électronique de détection d'une cible, embarqué à bord d'un engin volant motorisé, piloté par un utilisateur ;
- la figure 2 est un organigramme d'un procédé de détection d'une cible selon l'invention ;
- la figure 3 est une vue schématique d'un segment, comportant plusieurs tronçons successifs de niveaux de gris distincts et utilisé pour la détection de cible ;
- les figures 4 à 6 sont des vues représentant des étapes successives pour la détermination d'un ensemble de segments de référence relatifs à une représentation de référence de la cible ; et
- les figures 7 et 8 sont des vues représentant des étapes successives pour la détermination de segments relatifs à la cible à partir des segments de référence relatifs à la représentation de référence de la cible.

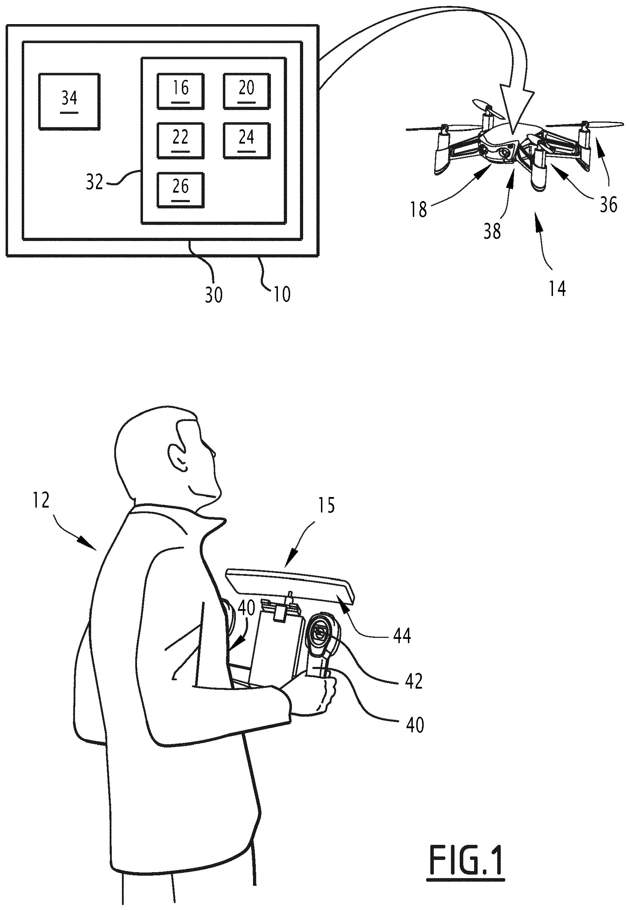

Sur la figure 1, un système électronique 10 de détection d'une cible 12 permet de détecter une représentation de la cible 12 dans une image acquise, notamment dans une image acquise de la part d'un engin volant motorisé 14, tel qu'un drone, en particulier un drone à voilure tournante ou encore un drone à voilure fixe, l'engin volant motorisé 14 étant pilotable à distance, notamment via une manette 15.

Le système électronique de détection 10 est par exemple embarqué à bord de l'engin volant motorisé 14. En variante, le système électronique de détection 10 est embarqué dans un appareil électronique, de préférence portable, distinct de l'engin volant motorisé 14, l'appareil électronique étant par exemple un ordiphone (de l'anglais *smartphone*) ou une tablette électronique, en particulier lorsque la manette 15 est elle-même mise en oeuvre via l'ordiphone ou la tablette électronique.

Le système électronique de détection 10 comprend un module d'acquisition 16 configuré pour acquérir une image d'une scène comportant la cible 12, par exemple de la part d'un capteur d'image 18 équipant l'engin volant motorisé 14. Chaque image acquise comporte une représentation de la cible 12.

Le système électronique de détection 10 comprend en outre un module de détermination 20 configuré pour déterminer au moins un segment 21, de préférence rectiligne, relatif à la cible 12 à partir d'au moins un segment de référence 21 R relatif à une représentation de référence de la cible. Le système électronique de détection 10 comprend un module d'estimation 22 configuré pour estimer alors une zone entourant la représentation de la cible 12 dans l'image acquise, à partir du ou des segments 21 déterminés par le module de détermination 20.

En complément facultatif, le système électronique de détection 10 comprend un module de calcul 24 configuré pour calculer un repère normalisé à partir des segments 21 déterminés par le module de détermination 20, le repère normalisé ayant pour centre le barycentre des segments déterminés 21 pondérés par leur longueur, et la longueur moyenne des segments déterminés 21 étant fixée égale à l'unité dans le repère normalisé.

En complément facultatif encore, le système électronique de détection 10 comprend un module de mise à jour 26 configuré pour mettre à jour dans le repère normalisé des grandeurs calculées pour chacun des segments 21 déterminés par le module de détermination 20, les grandeurs calculées mises à jour étant par exemple des écarts calculés entre un segment déterminé 21 et un segment de référence 21 R associé.

Dans l'exemple de la figure 1, le système électronique de détection 10 comprend une unité de traitement d'informations 30, formée par exemple d'une mémoire 32 et d'un processeur 34 associé à la mémoire 32.

La cible 12 est par exemple une personne, telle que le pilote de l'engin volant motorisé 14, le système électronique de détection 10 étant particulièrement utile lorsque l'engin volant motorisé 14 est dans un mode de poursuite pour suivre la cible 12, notamment lorsque le pilote de l'engin volant motorisé 14 pratique une activité sportive. L'homme du métier comprendra bien entendu que l'invention s'applique à tout type de cible 12, la cible 12 étant de préférence mobile. Le système électronique de détection 10 est également utile lorsque l'engin volant motorisé 14 est dans un mode de pointage vers la cible, permettant à l'engin volant motorisé 14 de toujours viser la cible 12, mais sans se déplacer tout seul, laissant au pilote la possibilité de changer la position relative du drone de l'engin volant motorisé 14, par exemple en tournant autour de la cible.

L'engin volant motorisé 14 est connu en soi, et est par exemple un drone, c'est-à-dire un aéronef sans pilote à bord. Le drone est par exemple un drone à voilure tournante, comportant au moins un rotor 36. Sur la figure 1, le drone comporte une pluralité de rotors 36, et est alors appelé drone multirotor. Le nombre de rotors 36 est en particulier égal à 4 dans cet exemple, et le drone est alors un drone quadrirotor.

L'engin volant motorisé 14 comporte le capteur d'image 18 configuré pour acquérir une image d'une scène, le capteur d'image 18 étant par exemple une caméra à visée frontale permettant d'obtenir une image de la scène vers laquelle est orienté l'engin volant motorisé 14. En variante ou en complément, le capteur d'image 18 est une caméra à visée verticale, non représentée, pointant vers le bas et configurée pour capter des images successives d'un terrain survolé par l'engin volant motorisé 14.

L'engin volant motorisé 14 comporte un module de transmission 38 configuré pour échanger des données, de préférence par ondes radioélectriques, avec un ou plusieurs équipements électroniques, notamment avec la manette 15, voire avec d'autres éléments électroniques pour la transmission de la ou des images acquises par le capteur d'image 18.

La manette 15 est connue en soi, et permet de piloter l'engin volant motorisé 14. Dans l'exemple de la figure 1, la manette 15 comprend deux poignées de préhension 40, chacune étant destinée à être saisie par une main respective du pilote, une pluralité d'organes de commande, dont deux manches à balai 42 (de l'anglais *joystick*), chacun étant disposé à proximité d'une poignée de préhension 40 respective et étant destiné à être actionné par le pilote, de préférence par un pouce respectif. En variante, non représentée, la manette 15 est mise en oeuvre via l'ordiphone ou la tablette électronique, comme décrit précédemment.

La manette 15 comprend également une antenne radioélectrique 44 et un émetteur-récepteur radioélectrique, non représenté, pour l'échange de données par ondes radioélectriques avec l'engin volant motorisé 14, à la fois en liaison montante et en liaison descendante.

Dans l'exemple de la figure 1, le module d'acquisition 16, le module de détermination 20 et le module d'estimation 22, ainsi qu'en complément facultatif le module de calcul 24 et le module de mise à jour 26, sont réalisés chacun sous forme d'un logiciel exécutable par le processeur 34. La mémoire 32 de l'unité de traitement d'informations 30 est alors apte à stocker un logiciel d'acquisition configuré pour acquérir une image d'une scène comportant la cible 12, un logiciel de détermination configuré pour déterminer au moins un segment 21, de préférence rectiligne, relatif à la cible 12 à partir d'au moins un segment de référence 21 R relatif à une cible de référence, et un logiciel d'estimation configuré pour estimer une zone entourant la représentation de la cible 12 dans l'image acquise, à partir du ou des segments déterminés 21. En complément facultatif, la mémoire 32 de l'unité de traitement d'informations 30 est également apte à stocker un logiciel de calcul configuré pour calculer le repère normalisé à partir des segments déterminés 21, et un logiciel de mise à jour configuré pour mettre à jour dans le repère normalisé les grandeurs calculées pour chacun des segments déterminés 21, notamment les écarts calculés entre respectivement un segment déterminé 21 et un segment de référence 21 R associé. Le processeur 34 de l'unité de traitement d'informations 30 est alors apte à exécuter le logiciel d'acquisition, le logiciel de détermination et le logiciel d'estimation, ainsi qu'en complément facultatif le logiciel de calcul et le logiciel de mise à jour.

En variante non représentée, le module d'acquisition 16, le module de détermination 20 et le module d'estimation 22, ainsi qu'en complément facultatif le module de calcul 24 et le module de mise à jour 26, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

Selon l'invention, le module de détermination 20 est configuré pour déterminer au moins un segment 21, de préférence rectiligne, qui soit distinct d'un contour de la représentation de la cible 12 et comporte au moins un point inclus à l'intérieur de ladite représentation.

Chaque segment 21, 21 R est de préférence rectiligne, distinct du contour de la représentation de la cible 12, et comporte au moins un point inclus à l'intérieur de ladite représentation. Chaque segment 21, 21 R comporte de préférence une majorité de points inclus à l'intérieur de ladite représentation, parmi l'ensemble des points constituant ledit segment 21, 21 R.

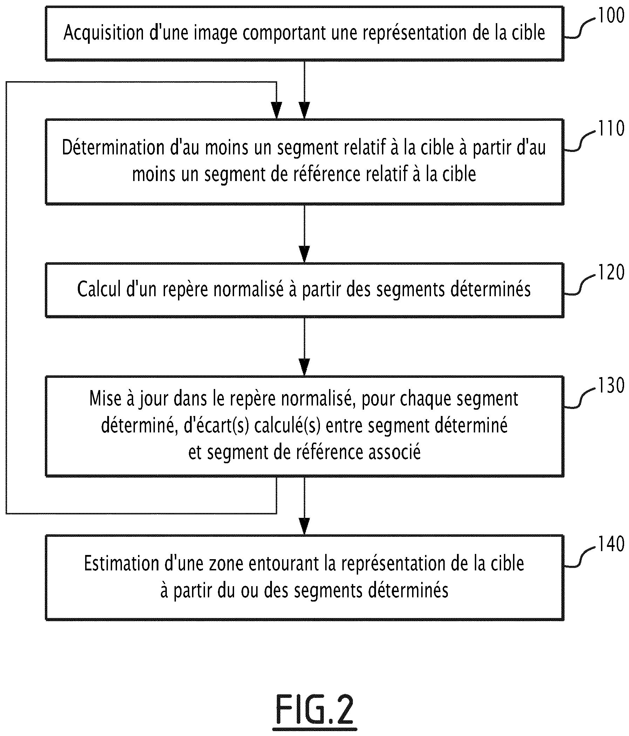

Le fonctionnement du système électronique de détection 10 selon l'invention, en particulier de son module de détermination 20, va être à présent décrit à l'aide de la figure 2 illustrant un organigramme du procédé de détection selon l'invention, mis en oeuvre par ordinateur.

Lors d'une étape initiale 100, le module d'acquisition 16 acquiert une image comportant une représentation de la cible 12, par exemple de la part du capteur d'image 18. L'image acquise est une image d'une scène comportant la cible 12.

Lors d'une étape suivante 110, le module de détermination 20 détermine au moins un segment 21 relatif à la cible 12 à partir d'au moins un segment de référence 21 R relatif à une représentation de référence de la cible 12 dans une image précédente.

Chaque segment 21, 21 R est de préférence rectiligne, comporte les coordonnées de deux points dans l'image et une ou plusieurs valeurs d'intensité, les valeurs d'intensité étant de préférence exprimées en niveau de gris ou en couleur. Les coordonnées de deux points correspondent aux extrémités 112 du segment 21, 21 R. Lorsque les valeurs d'intensité sont exprimées en couleur, les valeurs d'intensité sont par exemple des valeurs sous forme de trois nombres distincts, telles que des valeurs RGB (de l'anglais *Red Green Blue*), les nombres représentant alors des valeurs en rouge, vert et bleu.

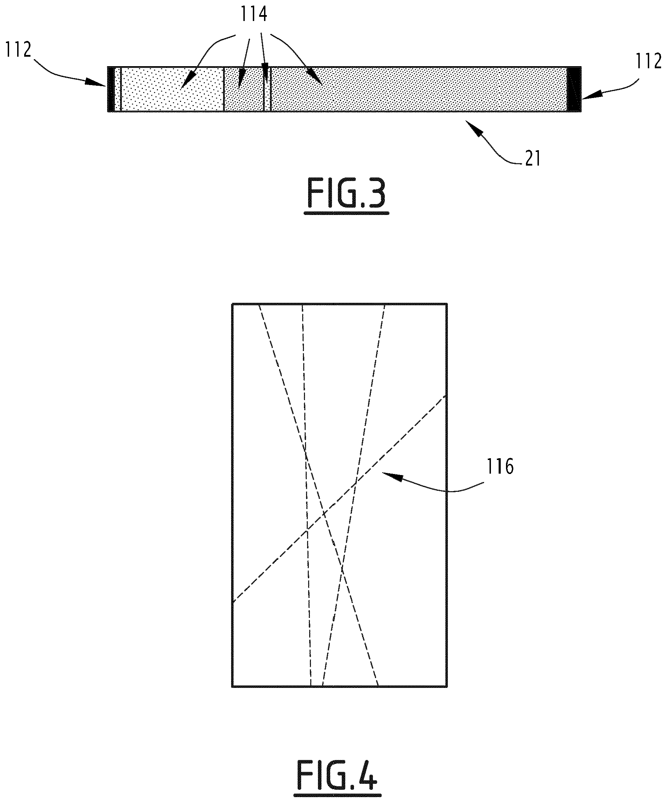

Chaque segment 21, 21R comporte de préférence plusieurs tronçons 114 successifs entre ses deux extrémités 112, et à chaque tronçon 114 est associée une valeur respective d'intensité, ladite valeur d'intensité du tronçon 114 étant également de préférence exprimée en niveau de gris ou en couleur, comme représenté sur la figure 3.

Dans cet exemple, chaque segment 21, 21 R est alors défini par les coordonnées cartésiennes des extrémités 112 du segment 21, 21R dans l'image, et les valeurs successives d'intensité, exprimées de préférence par niveau de gris ou en couleur, regroupées par zones, ou tronçons 114. L'intensité varie sensiblement d'un tronçon 114 à l'autre, l'écart d'intensité entre deux tronçons 114 successifs étant par exemple supérieur ou égal à 10 sur une échelle de 0 à 255 en niveau de gris, de préférence encore supérieur ou égal à 20 sur ladite échelle de 0 à 255. Lorsque les valeurs successives d'intensité sont exprimées en couleur, l'écart d'intensité entre deux tronçons 114 successifs est de préférence sous forme d'une combinaison, par exemple une combinaison linéaire, des trois valeurs de couleur, telles que les valeurs RGB.

Chaque segment 21, 21 R présente une largeur d'un pixel, ou encore de plusieurs pixels de l'image, comme représenté sur la figure 3. L'homme du métier comprendra alors que chaque segment présente une largeur typiquement comprise entre 1 et 10 pixels, de préférence comprise entre 1 et 5 pixels. Les tronçons 114 de chaque segment 21, 21 R sont de préférence déterminés via un algorithme de seuillage, afin qu'à chaque tronçon 114 soit associée une valeur respective d'intensité.

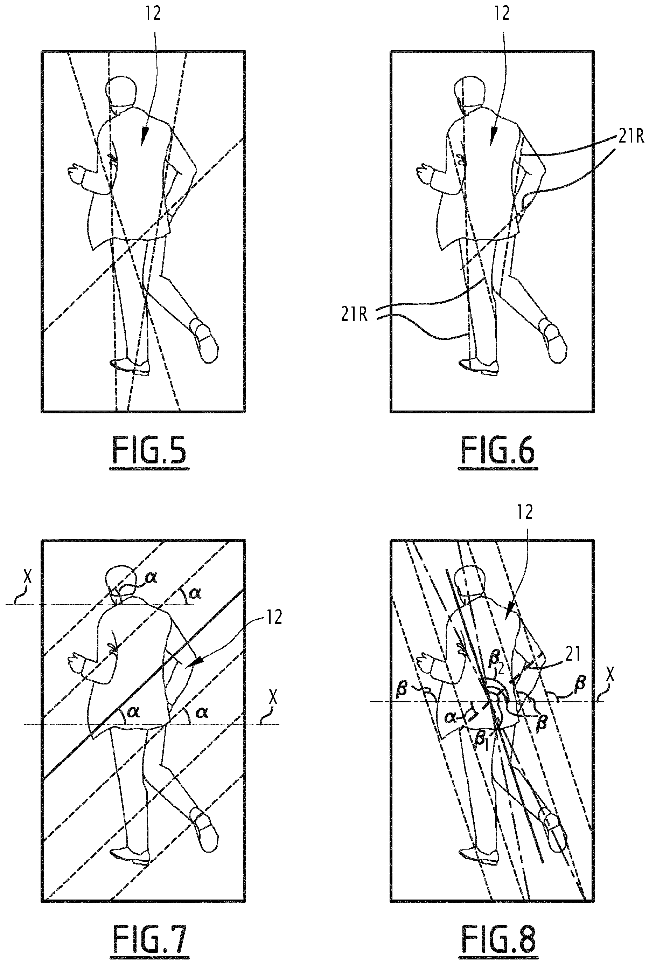

Pour la détermination préalable des segments de référence 21 R associés à la cible 12 dans l'image précédente, le module de détermination 20 est configuré pour projeter un ensemble 116 de droites de référence, visible sur la figure 4, sur l'image précédente, comme représenté sur la figure 5, puis pour enlever les bords des droites, externes à la représentation de la cible, afin de ne conserver que les segments 21R internes à la représentation de la cible, comme représenté sur la figure 6. Cette suppression des bords des droites qui sont externes à la représentation de la cible 12 est effectuée via à un algorithme de séparation fond/cible.

Cette détermination préalable des segments de référence 21R est de préférence effectuée à l'intérieur d'une zone, telle qu'une fenêtre rectangulaire, initialement sélectionnée par l'utilisateur dans une image initiale, l'image initiale formant alors l'image précédente précitée.

L'ensemble de droites 116 résulte par exemple d'un tirage aléatoire ou pseudo-aléatoire, afin d'obtenir un ensemble homogène en termes de valeurs d'angle de ces droites par rapport à une direction de référence, ainsi qu'en termes de position de ces droites dans l'image. La direction de référence est par exemple la direction horizontale X, visible sur les figures 7 et 8. En variante, la direction de référence est une direction verticale, non représentée, ou encore tout autre direction fixe et identique d'une image à l'autre.

En variante, l'ensemble de droites 116 est sélectionné suivant une loi de sélection, calculée pour qu'une pluralité de valeurs d'angle entre les droites de l'ensemble 116 et la direction de référence soit obtenue, ainsi qu'une pluralité de positions de ces droites de l'ensemble 116.

Les segments obtenus à l'issue de la projection de l'ensemble de droite 116, puis de la suppression des bords des droites qui sont externes à la représentation de la cible 12 forment alors les segments de référence 21 R qui vont être utilisés pour détecter une nouvelle représentation de la cible 12 dans la nouvelle image acquise.

En complément facultatif, les segments de référence 21R sont ordonnés suivant au moins l'un des deux critères suivants. Le premier critère est un critère de taille, les segments de référence 21R étant de préférence ordonnés du plus grand segment au plus petit segment. Le deuxième critère est un critère de variation d'angle entre chaque segment 21R et la direction de référence, les segments de référence 21R étant alors de préférence ordonnés de manière à avoir une variation d'angle minimale entre deux segments de référence 21R ordonnés consécutivement en début de liste.

Après élaboration de cette liste de segments de référence 21R, la liste de segments de référence 21R demeure de préférence identique pour toutes les déterminations de nouveaux segments dans les différentes images acquises successivement.

Pour la détermination des segments 21 relatifs à la cible 12 dans la nouvelle image acquise, le module de détermination 20 est configuré, pour au moins un segment de référence 21R, pour présélectionner plusieurs segments distincts du contour de la représentation de la cible 12 et comportant chacun au moins un point inclus à l'intérieur de ladite représentation, puis pour calculer, pour chaque segment présélectionné, un écart entre le segment présélectionné et le segment de référence 21R, le segment déterminé 21 étant alors le segment parmi les segments présélectionnés pour lequel l'écart calculé a la plus faible valeur.

A titre d'exemple, pour le premier segment de la liste des segments de référence 21 R, le module de détermination 20 présélectionne plusieurs segments dans l'image acquise, un premier segment présélectionné ayant le même angle avec la direction de référence que le premier segment de référence 21R et également la même position dans l'image que le premier segment de référence 21R, et les autres segments présélectionnés correspondant à des décalages de position du premier segment de référence 21R tout en ayant la même valeur d'angle par rapport à la direction de référence, telle que la direction horizontale X, que pour le premier segment de référence 21R, comme représenté sur la figure 7.

Dans l'exemple de la figure 7, la droite en trait continu correspond à la droite portée par le premier segment de référence 21R, et les différentes droites en trait pointillé correspondent aux droites décalées par rapport à celle associée au premier segment de référence 21 R, ces droites décalées formant un même angle $\alpha$ avec la direction de référence, et étant espacées les unes des autres d'une distance prédéfinie.

Le module de détermination 20 calcule ensuite, pour chaque segment présélectionné et à partir du premier segment de référence 21R, l'écart entre le segment présélectionné et le premier segment de référence 21R, le segment 21 déterminé à partir du premier segment de référence 21R étant alors celui pour lequel l'écart calculé a la plus faible valeur.

En complément facultatif, si le segment ainsi déterminé a une valeur d'écart supérieure à un seuil prédéfini, alors le segment ainsi déterminé n'est pas retenu et le module de détermination 20 réitère les étapes de présélection et de calcul d'écart avec le segment suivant dans la liste des segments de référence 21R.

L'écart calculé entre un segment à évaluer, tel que le segment présélectionné, et le segment de référence 21R associé est, par exemple fonction de valeurs d'intensité dudit segment et du segment de référence 21R. Le module de détermination 20 est alors configuré pour calculer un écart d'intensité entre ledit segment et le segment de référence 21 R associé, l'écart d'intensité calculé étant de préférence exprimé en niveau de gris ou en couleur.

En complément facultatif, lors du calcul de l'écart, un écart unitaire est calculé entre chaque tronçon du segment à évaluer, tel que le segment présélectionné, et chaque tronçon correspondant du segment de référence 21R, l'écart calculé étant alors fonction des écarts unitaires calculés.

La correspondance entre tronçons 114 du segment de référence 21R et tronçons 114 du segment à évaluer est, par exemple, effectuée en conservant un même ordre des tronçons 114 d'un segment à l'autre, à partir de chaque première extrémité. En variante, la correspondance entre tronçons 114 du segment de référence 21R et tronçons 114 du segment à évaluer ne respecte pas nécessairement l'ordre des tronçons 114 d'un segment à l'autre.

Un écart unitaire d'intensité $d_v(z)$ vérifie alors par exemple l'équation suivante :

$$d_v(z) = \frac{|v_2 - v_1|}{v_{\max}} \qquad (1)$$

où z est un indice du tronçon pour lequel l'écart unitaire d'intensité est calculé,

$v_1$ est la valeur de l'intensité dudit tronçon d'indice z pour le segment de référence 21 R, de préférence exprimée en niveau de gris ou en couleur,

$v_2$ est la valeur d'intensité dudit tronçon d'indice z pour le segment évalué, tel que le segment présélectionné, ladite valeur étant exprimée dans la même unité que la valeur $v_1$, de préférence en niveau de gris ou en couleur,

$v_{max}$ est la valeur maximale de l'intensité, suivant l'unité considérée pour mesurer la valeur de l'intensité, $v_{max}$ étant par exemple égale à 255 pour une valeur en niveau de gris exprimée sur 8 bits.

La valeur de l'écart unitaire d'intensité $d_v(z)$ calculé est alors comprise entre 0 et 1.

En complément ou en variante, l'écart calculé par le module de détermination 20 est fonction de longueurs, d'une part, du segment à évaluer, tel que le segment présélectionné, et d'autre part, du segment de référence 21R associé.

Le module de détermination 20 est alors configuré pour calculer un écart de longueur entre le segment à évaluer et le segment de référence 21R associé.

Un écart unitaire de longueur $d_l(z)$ vérifie alors par exemple l'équation suivante :

$$d_l(z) = \left| \frac{l_2}{L_2} - \frac{l_1}{L_1} \right| \tag{2}$$

où z désigne l'indice du tronçon considéré pour le calcul de l'écart unitaire de longueur,

$l_1$ est la longueur dudit tronçon pour le segment de référence 21R, ladite longueur étant par exemple exprimée en nombre de pixels,

$L_1$ est la longueur totale du segment de référence 21R, exprimée dans la même unité que la longueur $l_1$ précitée,

$l_2$ est la longueur du tronçon considéré pour le segment à évaluer, toujours exprimée dans la même unité que les longueurs $l_1$ et $L_1$, par exemple en nombre de pixels,

$L_2$ est la longueur du segment à évaluer, tel que le segment présélectionné, exprimée dans la même unité que les longueurs $l_1$, $L_1$ et $l_2$.

La valeur de l'écart unitaire de longueur $d_l(z)$ est alors également comprise entre 0 et 1.

En complément ou en variante, l'écart calculé par le module de détermination 20 est fonction de positions du segment à évaluer d'une part, et du segment de référence 21 R d'autre part. Le module de détermination 20 est alors configuré pour calculer un écart de positions entre le segment à évaluer, tel que le segment présélectionné, et le segment de référence 21 R associé.

L'écart de position est par exemple fonction d'un écart unitaire de position $d_p(z)$ entre les centres des deux zones respectives considérées pour le segment à évaluer et le segment de référence 21 R associé, c'est-à-dire un écart unitaire de position $d_p(z)$ entre les centres des tronçons considérés pour le segment à évaluer et le segment de référence 21 R, par rapport à la dimension du segment.

L'écart unitaire de position $d_p(z)$ vérifie alors par exemple l'équation suivante :

$$d_p(z) = \left| \frac{p_2}{L_2} - \frac{p_1}{L_1} \right| \tag{3}$$

où z désigne l'indice du tronçon de segment considéré pour les segments à évaluer et de référence,

$p_1$ représente la position du centre du tronçon considéré pour le segment de référence 21 R, cette position étant par exemple exprimée en nombre de pixels par rapport à sa première extrémité,

$L_1$ représente la longueur totale du segment de référence 21 R, exprimée dans la même unité que la position $p_1$, par exemple en nombre de pixels,

$p_2$ représente la position du tronçon considéré pour le segment à évaluer, cette position $p_2$ étant exprimée dans la même unité que la position $p_1$, et

$L_2$ est la longueur totale du segment à évaluer, exprimée dans la même unité que les positions $p_1$ et $p_2$ et la longueur $L_1$.

En complément facultatif, un écart unitaire $d_c(z)$ calculé par le module de détermination 20 pour le tronçon d'indice z est fonction à la fois de l'écart unitaire d'intensité $d_v(z)$, de l'écart unitaire de longueur $d_l(z)$ et de l'écart unitaire de position $d_p(z)$. L'écart unitaire calculé $d_c(z)$ est alors appelé écart unitaire global calculé, et l'écart unitaire global calculé $d_c(z)$ est alors par exemple une somme pondérée des trois écarts $d_v(z)$, $d_l(z)$, $d_p(z)$ précités, à savoir de l'écart d'intensité $d_v(z)$, de l'écart de longueur $d_l(z)$ et de l'écart de position $d_p(z)$.

L'écart unitaire global calculé $d_c(z)$ vérifie alors par exemple l'équation suivante :

$$\forall z \in Z, \quad d_c(z) = \frac{k_v.d_v(z) + k_p.d_p(z) + k_l.d_l(z)}{k_v + k_p + k_l} \qquad (4)$$

$$\forall z \in Z', \quad d_c(z) = 1$$

où z désigne l'indice de chaque tronçon de segment considéré,

Z désigne un ensemble de tronçons corrélés entre le segment à évaluer d'une part et le segment de référence 21 R d'autre part,

Z' désigne l'ensemble complémentaire de tronçons non-corrélés entre le segment à évaluer et le segment de référence 21 R,

$k_v$ désigne le poids associé à l'écart unitaire d'intensité $d_v(z)$,

$k_l$ désigne le poids associé à l'écart unitaire de longueur $d_l(z)$, et

$k_p$ désigne le poids associé à l'écart unitaire de position $d_p(z)$.

L'écart unitaire global calculé $d_c(z)$ est alors de valeur comprise entre 0 et 1.

Deux tronçons corrélés entre le segment à évaluer d'une part et le segment de référence 21 R associé d'autre part sont des tronçons pour lesquels la valeur de l'écart calculé entre eux est faible, de préférence inférieure à un seuil prédéfini, tel qu'un seuil de valeur égale à 0,4. L'écart pris en compte pour la corrélation de deux tronçons 114 est, par exemple, l'écart unitaire global calculé $d_c(z)$, tel que défini selon la première équation de l'ensemble d'équations (4). En variante, l'écart pris en compte pour la corrélation de deux tronçons 114 est l'écart unitaire d'intensité $d_v(z)$, l'écart unitaire de longueur $d_l(z)$, l''écart unitaire de position $d_p(z)$, ou encore une combinaison de deux de ces trois écarts unitaires $d_v(z)$, $d_l(z)$, $d_p(z)$.

Lorsqu'un segment à évaluer est associé à un segment de référence 21 R, seuls certains de leurs tronçons sont, par exemple, corrélés entre eux. En variante, lorsque deux segments sont associés, tous leurs tronçons sont corrélés entre eux, de préférence deux à deux.

L'écart $d_c$ calculé par le module de détermination 20 entre le segment à évaluer et le segment de référence 21 R associé est alors fonction de chacun des écarts unitaires globaux calculés $d_c(z)$ entre tronçons respectifs desdits segments. L'écart $d_c$ calculé entre les deux segments est par exemple une somme des écarts unitaires globaux calculés $d_c(z)$ pour chacun des tronçons, de préférence une somme pondérée par la longueur $l_{réf}(z)$ de chaque tronçon d'indice z dans le segment de référence 21 R.

L'écart calculé $d_c$ vérifie alors par exemple l'équation suivante :

$$d_c = \frac{\sum_z d_c(z).l_{ref}(z)}{L_{ref}} \qquad (5)$$

où $l_{réf}(z)$ désigne la longueur du tronçon d'indice z dans le segment de référence 21 R, et

$L_{réf}$ désigne la longueur du segment de référence 21 R, exprimée dans la même unité que $l_{réf}$, par exemple exprimée en nombre de pixels.

La valeur de l'écart calculé $d_c$ est alors comprise entre 0 et 1.

L'écart calculé $d_c$ est alors fonction des écarts unitaires globaux calculés $d_c(z)$, chaque écart global $d_c(z)$ étant calculé entre chaque tronçon du segment à évaluer et chaque tronçon correspondant du segment de référence 21 R.

En complément facultatif, après la détermination d'au moins un segment relatif à la cible 12 dans la nouvelle image acquise à partir de la liste des segments de référence 21 R, le système électronique de détection 10 passe à l'étape 120 pour calculer un repère normalisé à partir du ou des segments déterminés.

Lors de l'étape facultative 120, le module de calcul 24 calcule un repère normalisé à partir du ou des segments déterminés, le repère normalisé ayant pour centre le barycentre des segments déterminés, pondérés par leur longueur, et la longueur moyenne des segments déterminés étant égale à l'unité dans le repère normalisé. Autrement dit, le repère normalisé est celui dans lequel le centre a pour coordonnées (0,0), et la longueur moyenne des segments est égale à 1.

Après le calcul du repère normalisé à partir des segments déterminés, le système de détection 10 passe à l'étape suivante 130, également facultative, pour mettre à jour dans le repère normalisé les écarts calculés pour chacun des segments déterminés.

Le module de mise à jour 26 est alors configuré pour calculer, pour chaque segment déterminé, un écart normalisé entre le segment de référence 21 R pour l'image de référence et le segment déterminé 21 associé dans la nouvelle image acquise. Pour le calcul de cet écart normalisé, les coordonnées du segment de référence 21 R d'une part et du segment déterminé 21 d'autre part sont exprimées chacune dans le repère normalisé de l'ensemble des segments associés entre la liste des segments de référence 21 R et les segments déterminés 21.

L'écart normalisé d(r,s) vérifie alors par exemple l'équation suivante :

$$d(r,s) = \frac{w_p.d_p + w_l.d_l + w_c.d_c}{w_p + w_l + w_c} \qquad (6)$$

où r désigne le segment de référence 21 R et s désigne le segment déterminé 21 dans la nouvelle image acquise, $d_p$ désigne la distance euclidienne entre les centres des segments de référence 21R et déterminé 21, notés respectivement $C_r$, $C_s$, cette distance étant de valeur inférieure ou égale à 1, et vérifiant par exemple l'équation suivante :

$$d_p = \min \left( \left\| \overrightarrow{C_r C_s} \right\|, 1 \right) \qquad (7)$$

$d_l$ représente la valeur absolue de la différence des longueurs $l_r$, $l_s$ des deux segments, également inférieure ou égale à 1, et vérifiant l'équation suivante :

$$d_l = \min \left( \left| l_r - l_s \right|, 1 \right) \qquad (8)$$

$d_c$ représente l'écart calculé précédemment suivant l'équation (5),
$w_p$ représente un poids associé à la distance euclidienne $d_p$,
$w_l$ représente un poids associé à la valeur absolue de la différence des longueurs $d_l$, et
$w_c$ représente un poids associé à l'écart $d_c$ calculé précédemment suivant l'équation (5).

A l'issue de l'étape de mise à jour 130, le système de détection 10 retourne si besoin à l'étape 110 pour déterminer un autre segment relatif à la cible 12 dans la nouvelle image acquise à partir d'un autre segment de référence 21 R de la liste des segments de référence 21 R, de préférence à partir du segment de référence 21 R suivant dans ladite liste.

Pour la détermination d'un autre segment relatif à la cible 12 dans la nouvelle image acquise à partir d'un autre segment de référence 21 R parmi la liste des segments de référence 21 R, le module de détermination 20 présélectionne, à partir de cet autre segment de référence 21 R, plusieurs segments, ceux-ci étant distincts du contour de la représentation de la cible 12 et comportant chacun au moins un point inclus à l'intérieur de ladite représentation, et de préférence rectilignes.

Un premier segment présélectionné correspond, par exemple, à la direction portée par l'autre segment de référence 21 R, comme représenté par la droite en trait continu à la figure 8, formant un angle β avec la direction de référence, telle que la direction horizontale X. D'autres segments présélectionnés correspondent à des décalages de cette droite associée à l'autre segment de référence 21 R, tout en ayant une même valeur d'angle β par rapport à la droite de la direction de référence, les droites décalées étant représentées en trait pointillé à la figure 8, et d'autres segments présélectionnés sont obtenus en effectuant des variations d'angle à partir de la droite associée à l'autre segment de référence 21 R, comme représenté avec les droites en forme de points à la figure 8, une première de ces droites formant un angle $β_1$ avec la direction de référence, et une autre de ces droites formant un angle $β_2$ avec la direction de référence, les valeurs des angles $β_1$ et $β_2$ étant différentes de celle de l'angle β.

Le module de détermination 20 calcule ensuite, pour chaque segment présélectionné, un écart entre le segment présélectionné et l'autre segment de référence 21 R, le segment déterminé étant alors celui parmi les segments présélectionnés pour lequel l'écart calculé a la plus faible valeur. Le calcul de l'écart est effectué comme indiqué précédemment pour le calcul de l'écart lors de la détermination du premier segment.

Après chaque détermination du ou des autres segments relatifs à la cible 12 à partir de segments de référence 21 R additionnels issus de la liste des segments de référence 21 R, le module de calcul 24 calcule de manière facultative le repère normalisé obtenu à partir de l'ensemble des segments déterminés, puis le module de mise à jour 26 met à jour de manière facultative lors de l'étape 130 les écarts calculés pour chacun des segments déterminés dans le nouveau repère normalisé calculé lors de l'étape facultative 120 précédente, comme décrit précédemment.

En complément facultatif, à l'issue des étapes de détermination 110, de calcul 120 et de mise à jour 130, le système électronique de détection 10 est en outre configuré pour effectuer un filtrage parmi l'ensemble des segments déterminés 21, afin de vérifier que la position et la longueur des segments 21 déterminés dans le repère normalisé restent proches de ceux du segment de référence 21 R associé pour chaque segment déterminé, c'est-à-dire présentent des valeurs respectives d'écart inférieures à des seuils respectifs prédéterminés. Lorsque l'un des segments déterminés 21 présente, suite à la mise à jour des écarts dans le repère normalisé, des valeurs d'écart supérieures au seuil prédéfini, c'est-à-dire que la position et/ou la longueur dudit segment déterminé 21 ne sont plus suffisamment proches de celles du segment de référence 21 R associé, alors le système électronique de détection 10 est configuré pour supprimer ledit segment 21 de l'ensemble des segments 21 déterminés jusqu'ici.

Le système électronique de détection 10 passe alors à l'étape 140 afin d'estimer une zone entourant la représentation de la cible 12 dans la nouvelle image acquise, à partir du ou des segments déterminés lors de chaque étape 110. Le module d'estimation 22 est alors configuré pour estimer, à partir du ou des segments 21 déterminés précédemment dans la nouvelle image acquise, les coordonnées géométriques d'une zone, telle qu'une zone polygonale, de préférence une zone rectangulaire, entourant la représentation de la cible 12 dans la nouvelle image acquise.

Le module d'estimation 22 est, par exemple, configuré pour effectuer une projection de la zone initialement déterminée par l'utilisateur, depuis l'image initiale vers la nouvelle image acquise, en effectuant un changement de repère, en passant du repère initial associé à l'image initiale au dernier repère normalisé calculé lors de l'étape 120.

En complément ou en variante, le module d'estimation 22 est également configuré pour calculer un ou plusieurs côtés de la zone entourant la représentation de la cible 12 à partir du ou des segments déterminés 21. A cet effet, le module d'estimation 22 est, par exemple, configuré pour calculer pour au moins une direction, par exemple pour chacune des directions parmi les directions haut, droite, bas, gauche, la médiane des extrémités d'un certain nombre de segment(s) les plus loin dans cette direction. Le nombre de segments utilisés pour calculer cette médiane est par exemple égal à 3. La zone entourant la représentation de la cible 12 a alors, par exemple, pour frontière le cadre dont chaque bord a pour position la médiane correspondant à sa direction.

En complément facultatif, le module de détermination 20 est configuré en outre pour calculer un indice de similarité $I_S$ entre, d'une part, la liste des segments de référence 21 R obtenue à partir de la représentation de référence de la cible 12 dans l'image initiale, et d'autre part l'ensemble des segments 21 déterminés dans la nouvelle image acquise. Cet indice de similarité $I_S$ est, par exemple, calculé à partir d'une somme des écarts entre chaque segment de référence 21 R et chaque segment déterminé 21 associé, ou bien de la valeur 1 lorsqu'aucun segment n'a été trouvé en correspondance avec un segment de référence 21 R. Cette somme des écarts est de préférence une somme pondérée des écarts, la pondération étant effectuée en fonction de la longueur du segment de référence 21 R. Les segments les plus longs sont alors ceux qui ont le plus de poids dans le calcul de cet indice de similarité $I_S$ via ladite somme pondérée.

L'indice de similarité $I_S$ vérifie alors, par exemple l'équation suivante :

$$I_S = \frac{\sum_{n=1}^{N} d(r_n, s_n).l_{r_n}}{\sum_{n=1}^{N} l_{r_n}} \tag{9}$$

où n est l'indice du segment considéré, et N le nombre de segments 21 R de la liste des segments de référence 21 R,
$r_n$ désigne le segment de référence 21 R d'indice n et $s_n$ désigne le segment déterminé 21 d'indice n,
$d(r_n, s_n)$ représente l'écart normalisé entre le segment de référence 21 R d'indice n et le segment déterminé 21 d'indice n, et
$l_{rn}$ représente la longueur du segment de référence 21 R d'indice n.

L'indice de similarité $I_S$ fournit alors une indication quant à la similarité entre, d'une part, les segments déterminés 21, et d'autre part, les segments de référence 21 R identifiés initialement.

En complément facultatif, la zone entourant la représentation de la cible 12 est estimée lors de l'étape 140 uniquement lorsque l'indice de similarité $I_S$ ainsi calculé présente une valeur suffisamment faible, c'est-à-dire inférieure à un seuil de valeur prédéfinie, la valeur de ce seuil étant par exemple égale à 0,5.

Sinon, lorsque l'indice de similarité $I_S$ ainsi calculé présente une valeur trop élevée, le module d'estimation 22 n'estime aucune zone entourant la représentation de la cible 12, afin de ne pas estimer une zone qui aurait une probabilité trop élevée d'être erronée, et l'étape d'estimation 140 n'est alors pas effectuée, le procédé retournant directement à l'étape 100 afin d'acquérir une nouvelle image, pour le suivi de la cible 12.

Ainsi, le système électronique de détection 10 et le procédé de détection selon l'invention permettent de retrouver la cible 12 dans une nouvelle image acquise, à partir de la liste des segments de référence 21 R. Cette liste est par exemple obtenue à partir d'une identification préalable de la cible 12 effectuée par l'utilisateur dans une image initiale, l'utilisateur sélectionnant alors une zone, de préférence rectangulaire, entourant la cible 12.

Le système électronique de détection 10 et le procédé de détection selon l'invention permettent notamment de recadrer l'échelle de la cible 12 suivie, et de confirmer une nouvelle détection de la cible 12 lorsque celle-ci a été temporairement perdue dans une ou plusieurs images acquises successivement.

La représentation de la cible 12 est ainsi caractérisée par un ensemble de segments 21, 21 R, de préférence rectilignes, ainsi que cela a été décrit précédemment, ces segments 21, 21 R séparant chacun la cible 12 en tronçons de différentes valeurs suivant une orientation propre. Cette caractérisation permet alors de retrouver de manière plus efficace la cible dans les images acquises successivement en autorisant une certaine souplesse sur les déformations éventuelles de la cible, dues notamment à un changement d'angle de prise de vue.

Le système électronique de détection 10 et le procédé de détection selon l'invention sont en outre particulièrement efficaces en termes de temps de calcul, les calculs effectués étant des calculs à une seule dimension de par l'utilisation des segments 21, 21 R, de préférence rectilignes.

Le fait de calculer les écarts entre les segments de référence 21 R et les segments déterminés 21 en fonction en outre de la position et/ou de la taille relative des segments 21, 21R permet d'avoir une convergence plus rapide vers la représentation de la cible 12 recherchée dans la nouvelle image acquise.

Le système électronique de détection 10 et le procédé de détection selon l'invention permettent alors d'estimer correctement la zone entourant la représentation de la cible 12 dans près de la moitié des cas, et dans l'autre moitié des cas, la représentation de la cible n'est pas trouvée, c'est-à-dire n'est pas estimée, tout en ayant un très faible taux de faux positifs, c'est-à-dire d'estimations de zone effectuées à tort, ou de manière erronée, le taux de faux positifs étant égal à environ 5%.

Les inventeurs ont en outre pu constater que le procédé de détection selon l'invention est particulièrement efficace lorsque la cible 12 est bien contrastée avec un fond relativement simple, ce qui permet alors de déterminer plus précisément les extrémités des segments à l'aide de l'algorithme de séparation fond/cible.

L'utilisation de différentes valeurs de poids pour le calcul des différents écarts décrits précédemment, et de seuils pour définir au besoin un maximum acceptable pour les valeurs obtenues permet en outre de diminuer le taux de faux positifs.

Lorsque la zone estimée par le module d'estimation 22 est légèrement bruitée, le module d'estimation 22 est en outre configuré pour appliquer un filtre de type passe-bas à la zone estimée, afin de lisser le résultat obtenu.

On conçoit ainsi que le système électronique de détection 10 et le procédé de détection selon l'invention permettent d'améliorer le suivi de la cible mobile 12, en permettant notamment de recaler plus efficacement la position et/ou l'échelle de la représentation de la cible 12 dans la nouvelle image acquise, le procédé étant en outre réitérable à chaque nouvelle image acquise, afin d'effectuer ce recalage pour chaque nouvelle image acquise.

Ce procédé de détection selon l'invention présente en outre l'avantage d'obtenir directement une estimation de la zone entourant la représentation de la cible 12 dans l'image acquise, sans avoir à tester une pluralité de zones décalées successivement dans l'image acquise, comme cela est fait avec une technique connue de fenêtre glissante.

**Revendications**

1. Procédé de détection d'une cible (12), le procédé étant mis en oeuvre par un système électronique de détection (10) et comprenant les étapes suivantes :

   - l'acquisition (100) d'une image d'une scène comportant la cible (12), l'image acquise comportant une représentation de la cible (12),
   - la détermination (110) de N segment(s) (21) relatif(s) à la cible (12) à partir de N segment(s) de référence (21 R) relatif(s) à une représentation de référence de la cible (12), N étant un nombre entier supérieur ou égal à 1, et
   - l'estimation (140), à partir du ou des segments déterminés (21), d'une zone entourant la représentation de la cible (12) dans l'image acquise,

   au moins un segment déterminé (21) est distinct d'un contour de la représentation de la cible (12) et comporte un point inclus à l'intérieur de ladite représentation.

2. Procédé de détection selon la revendication 1, dans lequel au moins un segment déterminé (21) est rectiligne.

3. Procédé de détection selon la revendication 1 ou 2, dans lequel l'étape de détermination (110) comporte, pour au moins un segment de référence (21 R) :

   + la présélection de plusieurs segments distincts d'un contour de la représentation de la cible (12) et comportant chacun un point inclus à l'intérieur de ladite représentation,

+ le calcul, pour chaque segment présélectionné, d'un écart ($d_c$) entre le segment présélectionné et le segment de référence (21 R),

le segment déterminé (21) étant alors le segment parmi les segments présélectionnés pour lequel l'écart calculé ($d_c$) a la plus faible valeur.

4. Procédé de détection selon l'une quelconque des revendications précédentes, dans lequel chaque segment (21, 21 R) comporte des coordonnées de deux points dans l'image et une ou plusieurs valeurs d'intensité.

5. Procédé de détection selon les revendications 3 et 4, dans lequel l'écart calculé ($d_c$) est fonction de valeurs d'intensité du segment présélectionné et du segment de référence (21 R).

6. Procédé de détection selon l'une quelconque des revendications 3 à 5, dans lequel l'écart calculé ($d_c$) est fonction de longueurs du segment présélectionné et du segment de référence (21 R).

7. Procédé de détection selon l'une quelconque des revendications 3 à 6, dans lequel l'écart calculé ($d_c$) est fonction de positions du segment présélectionné et du segment de référence (21 R).

8. Procédé de détection selon l'une quelconque des revendications 3 à 7, dans lequel chaque segment (21, 21 R) comporte plusieurs tronçons (114) successifs entre ses deux extrémités (112), avec une valeur respective d'intensité associée à chaque tronçon (114), et
dans lequel, lors du calcul de l'écart, un écart unitaire ($d_c(z)$) est calculé entre chaque tronçon (114) du segment présélectionné et chaque tronçon (114) correspondant du segment de référence (21 R), l'écart calculé ($d_c$) étant alors fonction des écarts unitaires calculés ($d_c(z)$).

9. Procédé de détection selon l'une quelconque des revendications précédentes, dans lequel le procédé comprend en outre les étapes suivantes :

- le calcul (120) d'un repère normalisé à partir de segments déterminés (21), le repère normalisé ayant pour centre le barycentre des segments déterminés (21) pondérés par leur longueur, et la longueur moyenne des segments déterminés (21) étant fixée égale à l'unité dans le repère normalisé, et
- la mise à jour (130) dans le repère normalisé des écarts ($d_c$) calculés pour chacun des segments déterminés (21).

10. Programme d'ordinateur comportant des instructions logicielles qui, lorsqu'elles sont exécutées par un ordinateur, mettent en oeuvre un procédé selon l'une quelconque des revendications précédentes.

11. Système électronique de détection d'une cible (12), comprenant :

- un module d'acquisition (16) configuré pour acquérir une image d'une scène comportant la cible (12), l'image acquise comportant une représentation de la cible (12),
- un module de détermination (20) configuré pour déterminer N segment(s) (21) relatif(s) à la cible (12) à partir de N segment(s) de référence (21 R) relatif(s) à une représentation de référence de la cible (12), et
- un module d'estimation (22) configuré pour estimer, à partir du ou des segments déterminés (21), une zone entourant la représentation de la cible (12) dans l'image acquise,

au moins un segment déterminé (21) étant distinct d'un contour de la représentation de la cible (12) et comporte un point inclus à l'intérieur de ladite représentation.

FIG.1

Acquisition d'une image comportant une représentation de la cible — 100

Détermination d'au moins un segment relatif à la cible à partir d'au moins un segment de référence relatif à la cible — 110

Calcul d'un repère normalisé à partir des segments déterminés — 120

Mise à jour dans le repère normalisé, pour chaque segment déterminé, d'écart(s) calculé(s) entre segment déterminé et segment de référence associé — 130

Estimation d'une zone entourant la représentation de la cible à partir du ou des segments déterminés — 140

FIG.2

FIG.3

FIG.4

FIG.5

FIG.6

FIG.7

FIG.8

Europäisches
Patentamt

European
Patent Office

Office européen
des brevets

**RAPPORT DE RECHERCHE EUROPEENNE**

Numéro de la demande

EP 17 19 6405

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | NEFIAN A V ET AL: "An embedded HMM-based approach for face detection and recognition", ICASSP, IEEE INTERNATIONAL CONFERENCE ON ACOUSTICS, SPEECH AND SIGNAL PROCESSING - PROCEEDINGS 1999 IEEE, IEEE, vol. 6, 15 mars 1999 (1999-03-15), pages 3553-3556, XP010328136, DOI: 10.1109/ICASSP.1999.757610 ISBN: 978-0-7803-5041-0 * page 3555, colonne de droite, alinéa 2 - page 3556, colonne de gauche, alinéa 3; figures 1, 2, 6 * | 1-8,10, 11 | INV. G06K9/00 G06K9/50 |
| | ----- | | |
| X | US 2016/180195 A1 (MARTINSON ERIC [US] ET AL) 23 juin 2016 (2016-06-23) * alinéa [0041] - alinéa [0042]; figures 6,7,9 * * alinéa [0084] * * alinéa [0100] * | 1-8,10, 11 | |
| | ----- | | DOMAINES TECHNIQUES RECHERCHES (IPC) |
| X | CHEN Y W ET AL: "Rolling penetrate descriptor for shape-based image retrieval and object recognition", PATTERN RECOGNITION LETTERS, ELSEVIER, AMSTERDAM, NL, vol. 30, no. 9, 1 juillet 2009 (2009-07-01), pages 799-804, XP026129681, ISSN: 0167-8655, DOI: 10.1016/J.PATREC.2008.04.015 [extrait le 2008-05-09] * page 799, colonne de gauche, alinéa 1 * * page 800, colonne de gauche, alinéa 2 - page 801, colonne de gauche, alinéa 2; figures 2-3 * | 1-11 | G06K |
| | ----- | | |
| | -/-- | | |

Le présent rapport a été établi pour toutes les revendications

| Lieu de la recherche | Date d'achèvement de la recherche | Examinateur |
|---|---|---|
| La Haye | 9 mars 2018 | Granger, Bruno |

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 17 19 6405

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| T | Boguslaw Cyganek: "Object Detection and Recognition in Digital Images: Theory and Practice", 1 janvier 2013 (2013-01-01), Wiley, XP055457727, pages 347-407, * le document en entier * | 1-11 | |
| T | Guowei Cai: "Unmanned Rotorcraft Systems." In: "Unmanned Rotorcraft Systems.", 1 janvier 2011 (2011-01-01), Springer, XP055386706, pages 230-254, * "11.4 Vision-Based Ground Target Following" * | 1-10 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 9 mars 2018 | Granger, Bruno |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   .............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 19 6405

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-03-2018

| Document brevet cité au rapport de recherche | Date de publication | Membre(s) de la famille de brevet(s) | Date de publication |
|---|---|---|---|
| US 2016180195 A1 | 23-06-2016 | JP 2017146957 A<br>US 2016180195 A1 | 24-08-2017<br>23-06-2016 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ZITNICK.** *Edge Boxes : Locating Object Proposals from Edges*